**Europäisches Patentamt**

**European Patent Office**

**Office européen des brevets**

(19)

(11) Veröffentlichungsnummer: **0 184 661**
**B1**

(12) # EUROPÄISCHE PATENTSCHRIFT

(45) Veröffentlichungstag der Patentschrift:
27.12.89

(21) Anmeldenummer: **85113999.8**

(22) Anmeldetag: **04.11.85**

(51) Int. Cl.⁴: **F 16 F 1/36**, F 16 L 3/16,
B 60 K 13/04

(54) **Lager für eine Abgasanlage eines Kraftfahrzeuges.**

(30) Priorität: **13.12.84 DE 3445491**

(43) Veröffentlichungstag der Anmeldung:
**18.06.86 Patentblatt 86/25**

(45) Bekanntmachung des Hinweises auf die Patenterteilung:
**27.12.89 Patentblatt 89/52**

(84) Benannte Vertragsstaaten:
**FR GB IT SE**

(56) Entgegenhaltungen:
**EP-A-0 042 273**
**DE-A-2 353 619**
**DE-A-2 658 358**
**FR-A-2 378 985**
**GB-A-2 010 438**
**US-A-4 183 496**

(73) Patentinhaber: **WEGU Gummi- und Kunststoffwerke Walter Dräbing KG, Mündener Strasse 31, D-3500 Kassel (DE)**

(72) Erfinder: **Tönnies, Herbert, Eichenweg 4, D-3512 Reinhardshagen (DE)**

(74) Vertreter: **Patentanwälte Dipl.- Ing. Rudolf Bibrach Dipl.- Ing. Elmar Rehberg, Postfach 1453 Pütterweg 6, D-3400 Göttingen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Lager für eine Abgasanlage eines Kraftfahrzeugs mit den im Oberbegriff des Anspruchs 1 angegebenen Merkmalen. Unter einer Abgasanlage wird die Gesamtheit von Rohrstücken, Schalldämpfern, Auspufftöpfen sowie ggf. einem Katalysator, einer Ladeeinrichtung o. dgl. verstanden, die an den Motor angeflanscht ist und zur Führung und Behandlung der Abgase dient. Derartige Abgasanlagen müssen am Boden des Kraftfahrzeugs federnd aufgehängt werden, wobei es darauf ankommt, daß die Schwingungen, die die Auspuffanlage gegenüber dem Fahrzeugboden und damit der Fahrgastzelle ausführt, möglichst gut isoliert werden, so daß an und in der Fahrgastzelle keine störenden Geräusche entstehen.

Ein Lager der eingangs beschriebenen Art ist aus der DE-A-2 353 619 bekannt. Zwischen einem inneren ringförmigen Lagerteil und einem dazu auf Abstand angeordneten äußeren, ebenfalls ringförmigen Lagerteil ist eine Verbindung mit einem Ringsteg geschaffen, der in radialer Richtung gesehen unterschiedliche Querschnitt aufweist. Damit wird gleichsam ein Rollring zwischen dem inneren und äußeren Lagerteil eingeschaltet, so daß dieses Lager bei großer axialer Beweglichkeit etwa ähnliche Eigenschaften bei den verschiedensten Bewegungen in axialer Richtung aufweist. Über die Federeigenschaften in anderer als axialer Richtung ist nichts ausgesagt. Das Federelement aus Elastomerwerkstoff ist jedoch bereits in einen Metallbügel eingesetzt.

Ein weiteres Lager ist aus der DE-B-2 658 358 bekannt. Es ist ein am Fahrzeugboden zu befestigender Metallbügel vorgesehen. Andererseits ist mit dem Auspuffrohr oder anderen Teilen der Abgasanlage jeweils ein Einhängebügel verbunden. Der Metallbügel und der Einhängebügel werden durch ein schlaufen- oder ringförmiges Federelement, welches im wesentlichen aus Elastomerwerkstoff besteht, zusammengehalten. Das Federelement besitzt zwei etwa halbkreisförmige Einschnitte, durch die die Enden des Metallbügels und des Einhängebügels hindurchgeführt werden. Das Federelement ist im statischen Belastungsfall bereits auf Zug beansprucht. Zur Verstärkung ist eine Einlage, z. B. aus Federstahl, in dem schlaufenförmigen Federelement vorgesehen. Ansonsten weist es in seinem Mittelbereich Stege auf, die auch einander kreuzen können. Auch diese Stege werden im wesentlichen auf Zug belastet. Einer Überbeanspruchung des Federelementes aus Elastomerwerkstoff soll durch die Einlage entgegengewirkt werden. Es ist jedoch sehr schwierig und auch aufwendig, eine ordnungsgemäße Verbindung zwischen der Einlage und dem Elastomerwerkstoff herzustellen. Bereits bei der Montage, d.h. beim Einführen des Metallbügels und des Einhängebügels besteht die Gefahr, daß der Elastomerwerkstoff des Federelementes durch die scharfen Kanten der Bügel verletzt bzw. mit Anrissen versehen wird. Das Lager berücksichtigt im übrigen nicht die thermische Ausdehnung einer Abgasanlage. Bei entsprechender Aufhängung stellen sich die ringförmigen Federelemente schräg, so daß eine ungünstige Belastung resultiert.

Auch auf anderen Gebieten der Technik sind Lager bekannt. So zeigt beispielsweise die FR-A-2 534 999 ein Lager mit einem Innenrohr und zwei dieses mit Abstand umgebende Flanschen aus Metall, wobei der Zwischenraum zwischen den metallenen Teilen mit einem Federelement aus Elastomerwerkstoff ausgefüllt ist. In dem Federelement soll bei der Montage des Lagers Vorspannung entstehen, so daß der Elastomerwerkstoff im wesentlichen im Druckbereich beansprucht wird. Um die Zusammendrückung bei Aufbringung der Vorspannung zu ermöglichen und damit die Nachgiebigkeit des Elastomerwerkstoffs zu steuern, sind in dem Federelement Ausnehmungen vorgesehen. Ein solches Lager ist für die Aufhängung einer Auspuffanlage schon allein deswegen ungeeignet, weil der Einhängebügel mit Spiel in das metallene Innenrohr eingeführt werden müßte, so daß bei den Bewegungen des Auspuffs störende Geräusche entstehen.

Der Erfindung liegt die Aufgabe zugrunde, ein Lager der eingangs beschriebenen Art mit einem Federelement aus Elastomerwerkstoff zu schaffen, welches bei statischer Belastung beim Einbauzustand eine große Federweichheit und bei Bewegungen der Auspuffanlage in allen Richtungen eine progressiv ansteigende Federhärte aufweist.

Erfindungsgemäß wird dies durch die Merkmale des Anspruchs 1 erreicht. Durch die Abkehr des Federelements von der symmetrischen Bauart ergibt sich die Möglichkeit, die Federungseigenschaften bei den verschiedenen Belastungsfällen besser als bisher anzupassen. Dies gilt bereits für die Druckbeanspruchung des Federelements im statischen Belastungsfall. Das Federelement füllt den Zwischenraum zwischen dem inneren und dem äußeren Lagerteil nur teilweise aus. Damit eröffnet sich die Möglichkeit, den einzelnen Teilen des Federelements ihre unterschiedlichen Funktionen genauer zuzuordnen bzw. die einzelnen Teile des Federelements in an den jeweiligen Anwendungsfall angepaßte Anordnung und bestimmte Ausbildung vorzusehen, damit auf diese Art und Weise eine Optimierung der Federkennlinien in den verschiedenen Raumrichtungen möglich wird. So ist es ohne Weiteres möglich, die Federstreben des Federelements als Primärfederelement und die beiden Lagerteile als Sekundärfederelemente auszubilden, die also nur beschränkt an der Federwirkung beteiligt sind. Insbesondere die als Primärfedern wirkenden Federstreben können entsprechend ihrer Ausbildung und Anordnung als Druck-, Zug- oder Biegefedern innerhalb des Federelements wirksam werden. Die unterhalb der horizontalen Längsmittelebene angeordneten Federstreben weisen insgesamt einen größeren Querschnitt als die oberhalb angeordneten Federstreben und werden im statischen Belastungsfall in günstiger Weise auf Druck beansprucht. Bei dem neuen Federelement entfällt nicht nur die Notwendigkeit einer Verbindung der Teile durch Vulkanisation, sondern es ist auch möglich, das Federelement unter Vorspannung in den ihn umgebenden Metallbügel einzubauen. Das Federelement ist aufgrund seines besonderen Aufbaus in der Lage, Schwingungen im Bereich von 1 bis 3 Hz, wie sie für die Eigenfrequenz der Fahrzeugkarosserie typisch sind, über Achsfrequenzen in der Größenordnung von 8 bis 30 Hz bis hinauf zu Hochfrequenzen von Motorschwingungen bis zu etwa 1000 Hz dämpfend aufzunehmen bzw. zu isolieren.

Das Lager ist auch insofern vorteilhaft, als es die Montage der Auspuffanlage an dem Kraftfahrzeug erleichtert und verkürzt. Es gestattet eine automatische Montage der Auspuffanlage unter dem Fahrzeugboden bzw. am Antriebsmotor. Das Lager läßt Längenänderungen der Abgasanlage unter Temperatureinwirkung zu, und zwar, ohne daß sich dadurch die Belastung am Federelement ändert. Im Federelement, insbesondere in den Federstreben, werden bei Belastung gemischte Druck-, Biege- und Schubspannungen hervorgerufen, also solche Spannungen, die der Elastomerwerkstoff gut aufnehmen kann und die im Gegensatz zu der reinen Zugspannung stehen, mit der bisher Ringe, Schlaufen o. dgl. bekannter Lager belastet wurden; hieraus resultiert auch eine höhere Lebensdauer des neuen Lagers. Das Federelement kann in dem Metallbügel zumindest in einer Richtung unter Vorspannung gehalten sein. Zweckmäßig läßt sich das Federelement auch in allen Richtungen unter Vorspannung einbauen, so daß das elastomere Material, z. B. Gummi, des Federelementes, im wesentlichen nur auf Druck belastet wird. Eine Druckbelastung ist im Gegensatz zu einer Zugbelastung - bei derartigen Werkstoffen immer von Vorteil für eine lange Lebensdauer.

Der äußere, etwa ringförmige Lagerteil kann runde, quadratische oder rechteckige oder eine sonstige angepaßte Form aufweisen. Diese richtet sich nach dem Anwendungsfall im einzelnen und nach den in verschiedenen Richtungen unter Umständen unterschiedlichen Federkennlinien für die entsprechenden Bewegungen. Bei kreisrunder Gestaltung werden die Federkennlinien in den verschiedenen Raumrichtungen nicht allzu sehr voneinander differieren, während bei quadratischer oder rechteckiger Formgebung durchaus relevante Unterschiede vorhanden sind, da die Hauptbeanspruchungsrichtung vertikal liegt. Wenn der äußere Lagerteil auf seiner dem Metallbügel zugekehrten Oberfläche eine Verankerungsrippe aufweist, dann besteht die Möglichkeit, das Federelement damit in einer Nut des Metallbügels zu halten. Es entfällt die kostenaufwendige Herstellung einer Metall-Gummiverbindung. Außerdem ergibt sich der Vorteil, daß das Federelement als Einzelteil gegenüber dem Metallbügel austauschbar gestaltet ist. Somit können auch für verschiedene Abgasanlagen Federelemente aus Gummi, beispielsweise unterschiedlicher Shore-Härte in Verbindung mit dem identisch ausgebildeten Metallbügel eingesetzt werden. Selbstverständlich ist es auch möglich, die Rippe an dem Metallbügel vorzusehen und diese in eine Nut am Federelement eingreifen zu lassen. Hierdurch wird jedoch die Ausbildung des Metallbügels etwas komplizierter.

Die Federstreben verbinden in der Regel die beiden Lagerteile des Federelementes miteinander jeweils einzeln. Sie können aber auch vom äußeren Lagerteil einzeln beginnend im Bereich des inneren Lagerteils zusammengeführt sein und gemeinsam in das innere Lagerteil übergehen. Im unteren Bereich empfiehlt sich am Federelement die Ausbildung einer Brücke, d. h. die Federstreben ergänzen einander brückenartig. Damit ist sichergestellt, daß diese Federstreben im wesentlichen nur auf Druck/Schub belastet werden. Die Anfangsfederkonstante der Federelemente zeigt einen höheren Wert, um dann im Bereich der statischen Last einen niedrigeren C-Wert einzunehmen. Schließlich schließt sich noch ein Bereich mit wieder erhöhtem C-Wert an. Die Verwendung einer Feder mit linearer Kennlinie würde bei gleichem Federweg einen wesentlich höheren C-Wert und damit eine schlechtere Isolierwirkung ergeben. Zwischen den Federstreben sind zwischen den beiden Lagerteilen Freiräume gebildet. Diese Freiräume sind in ihrer Bemessung auf den jeweiligen Anwendungsfall abgestimmt und ermöglichen es, daß der innere Lagerteil relativ zum äußeren Lagerteil über die Federstreben vergleichsweise weich geführt ist. Andererseits können auf der Innenseite des äußeren Lagerteils oder der Außenseite des inneren Lagerteils den Federweg des inneren Lagerteils gegenüber dem äußeren Lagerteil begrenzende Anschlagwulste vorgesehen sein, die den jeweiligen Federweg begrenzen und somit als mechanische Anschlagpuffer wirken. Es entfällt die gesonderte Anordnung von Anschlagpuffern.

Der innere Lagerteil kann in axialer Richtung eine größere Breite als der äußere Lagerteil aufweisen. Dieses Merkmal empfiehlt sich, wenn eine vergleichsweise geringe Flächenpressung zwischen dem Einhängebügel und dem inneren Lagerteil gewünscht wird bzw. erforderlich ist.

Die Erfindung wird anhand einiger Ausführungsbeispiele weiter beschrieben. Es zeigt:

Fig. 1   eine Seitenansicht einer ersten Ausführungsform des Lagers,

Fig. 2   einen Schnitt gemäß der Linie II - II in Fig. 1,

Fig. 3   die Darstellung des Federelementes in vergrößerndem Maßstab,

Fig. 4   die Darstellung des Lagers in einer zweiten Ausführungsform,

Fig. 5   eine Seitenansicht des Einhängebügels,

Fig. 6   ein Diagramm der Federkennlinie des Lagers gemäß Fig. 1 für die vertikale Ein- bzw. Ausfederung,

Fig. 7   ein Diagramm der Federkennlinie des Lagers gemäß Fig. 1 für die horizontale Ein- bzw. Ausfederung und

Fig. 8 ein Diagramm der Federkennlinie des Lagers gemäß Fig. 1 für die diagonale Ein- bzw. Ausfederung.

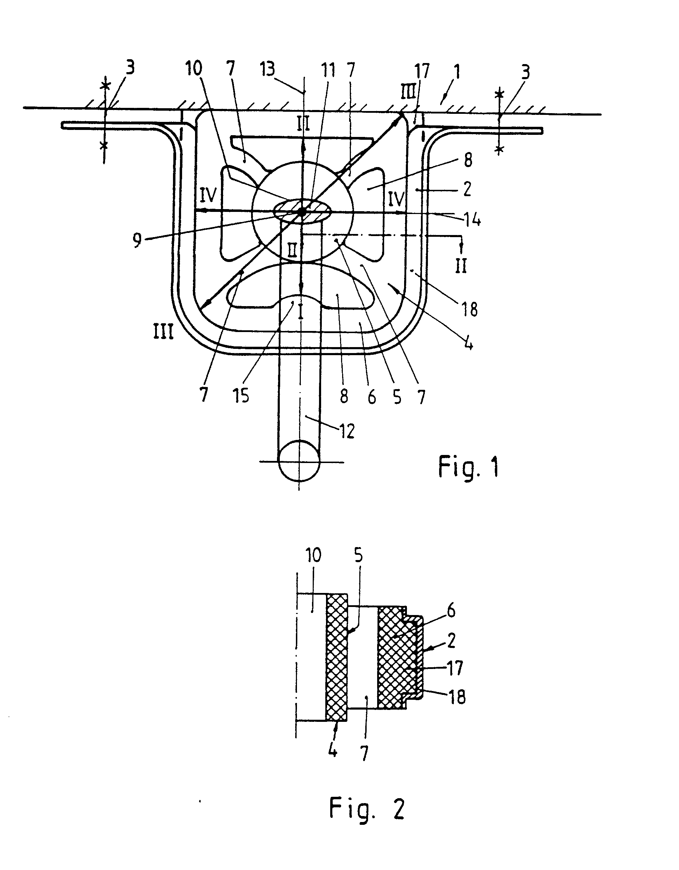

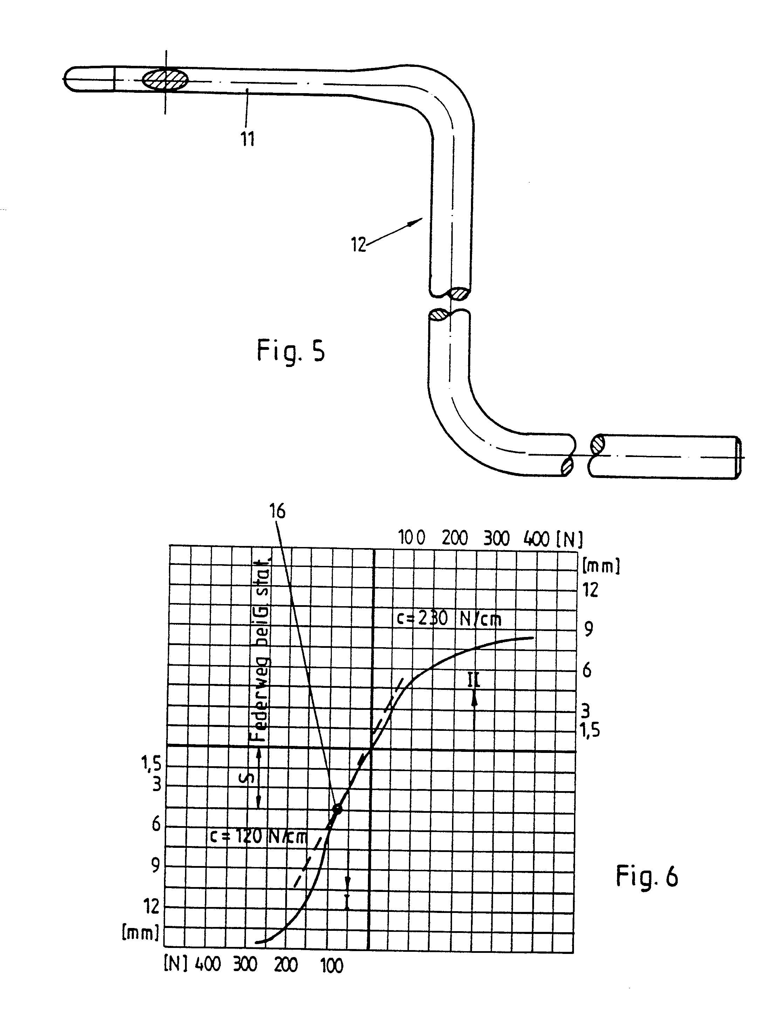

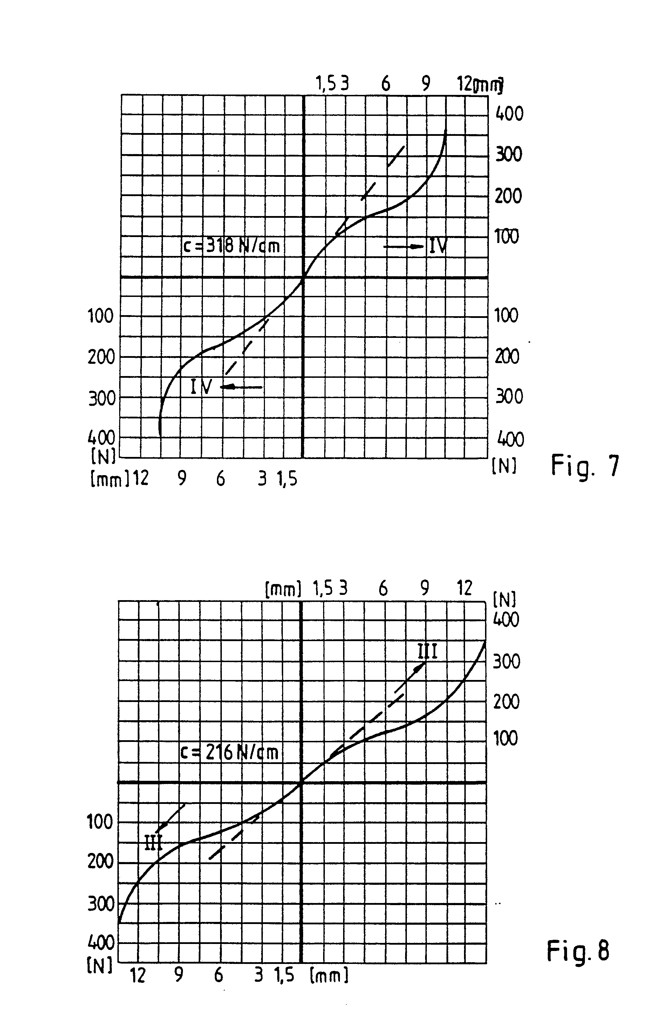

In Fig. 1 ist schematisch der Fahrzeugboden 1 angedeutet, an welchem das Lager zu befestigen ist. Fig. 1 zeigt eine Ansicht des Lagers in Fahrtrichtung, also in Längsrichtung des Fahrzeuges. Quer zur Fahrtrichtung wird ein Metallbügel 2 mit Hilfe von schematisch angedeuteten Schrauben 3 an dem Fahrzeugboden 1 befestigt. Der Metallbügel 2 gehört zu dem Lager und besitzt etwa U-förmige Gestaltung, mit der er ein Federelement 4 aus Gummi oder anderem elastomeren Werkstoff möglichst allseits umschließt. Fig. 1 zeigt die Einbausituation vor dem Anziehen der Schrauben, so daß erkennbar wird, daß das Federelement 4 gegenüber der Anlagefläche des Metallbügels 3 überstehend vorgesehen ist, so daß durch das Anziehen der Schrauben 3 das Federelement 4 in dem Metallbügel 2 unter Vorspannung eingepreßt bzw. aufgenommen wird. Das Federelement 4 ist ein zusammenhängender Körper, der jedoch funktionsmäßig dreigeteilt ist und somit aus einem inneren Lagerteil 5, aus einem äußeren Lagerteil 6 sowie aus dazwischen angeordneten Federstreben 7 besteht. Es wird erkennbar, daß der innere Lagerteil 5 und der äußere Lagerteil 6 auf Abstand zueinander angeordnet sind, also ein Zwischenraum gebildet ist, der wiederum durch die Federstreben 7 in mehrere Freiräume 8 unterteilt ist. Das Federelement 4 besitzt eine Achse 9, die parallel zur Fahrzeuglängsachse angeordnet ist. Wie die Darstellung in Figur 2 erkennen läßt, besitzt das innere Lagerteil 5 in Richtung der Achse 9 eine grössere Erstreckung als der äußere Lagerteil 6. Konzentrisch zur Achse 9 ist das innere Lagerteil 5 und auch das äußere Lagerteil 6 angeordnet bzw. ausgebildet. Der innere Lagerteil 5 besteht hier aus einem etwa kreisförmig begrenzten Materialstück und weist in seinem Inneren eine Durchbrechung 10 auf, die axial durchgehend vorgesehen ist, so daß hier das freie Ende 11 eines Einhängebügels 12 eingeführt werden kann. Der Einhängebügel 12 ist in Fig. 5 noch einmal in Seitenansicht dargestellt und ist im übrigen mit der nicht dargestellten Abgasanlage z. B. durch eine Schweißung oder eine Schelle verbunden. Wie ersichtlich kann die Durchbrechung 10 des inneren Lagerteils 5 als auch das freie Ende 11 des Einhängebügels 12 elliptischen, aufeinander abgestimmten Querschnitt aufweisen, so daß die Teile unter einem gewissen Formschluß aneinander gehalten sind. Die Ausbildung des Federelementes 4 ist hier symmetrisch zu einer vertikalen Längsmittelebene 13 und asymmetrisch zu einer horizontalen Längsmittelebene 14 ausgeführt. Es ist ersichtlich, wie die beiden oberhalb der horizontalen Längsmittelebene 14 angeordneten Federstreben 7 vergleichsweise dünneren Querschnitt aufweisen und jeweils einzeln von dem äußeren Lagerteil 6 ausgehen und in das innere Lagerteil 5 einmünden, wobei entsprechende Übergangsradien zur Verminderung von Kerbspannungen vorgesehen sind. Die beiden unterhalb der horizontalen Längsmittelebene 14 angeordneten Federstreben 7 besitzen hingegen einen größeren Querschnitt und gehen an der Übergangsstelle zu dem inneren Lagerteil 5 auch ineinander über. Sie bilden gleichsam eine Brücke, auf der sich der innere Lagerteil 5 abstützt. Es ist erkennbar, daß diese Federstreben 7 bei statischer Belastung in der Nullage sowie auch beim Einfedern in Richtung I auf Druck belastet werden, was vorteilhaft ist. In dieser Einfederrichtung I besitzt der äußere Lagerteil 6 einen Anschlagwulst 15, der die Amplitude der möglichen Bewegung in dieser Richtung begrenzt. Auch die übrigen Raumrichtungen sind durch römische Ziffern wiedergegeben. So ist die Ausfederrichtung mit II bezeichnet. Diagonale Bewegungen erfolgen in Richtung der Doppelpfeile III, während horizontale Bewegungen entsprechend dem Doppelpfeil IV erfolgen. Diese Doppelpfeile beziehen sich auf die in den Fig. 6 bis 8 wiedergegebenen Federkennlinien in den verschiedenen Richtungen, wobei die infolge statischer und dynamischer Belastung einwirkenden Kräfte über dem Federweg aufgezeigt sind. Fig. 6 zeigt auch die Nullage 16, also die Einfederung des inneren Lagerteils 5 gegenüber dem äußeren Lagerteil 6 bei statischer Belastung, also bei montierter Auspuffanlage. Aus den Diagrammen der Fig. 6 bis 8 sind jedoch nicht nur die Federkennlinien ersichtlich, sondern auch die Anschlagwirkung, also die Begrenzung der jeweiligen Federwege durch den äußeren Lagerteil 6 bzw. dem Metallbügel 2.

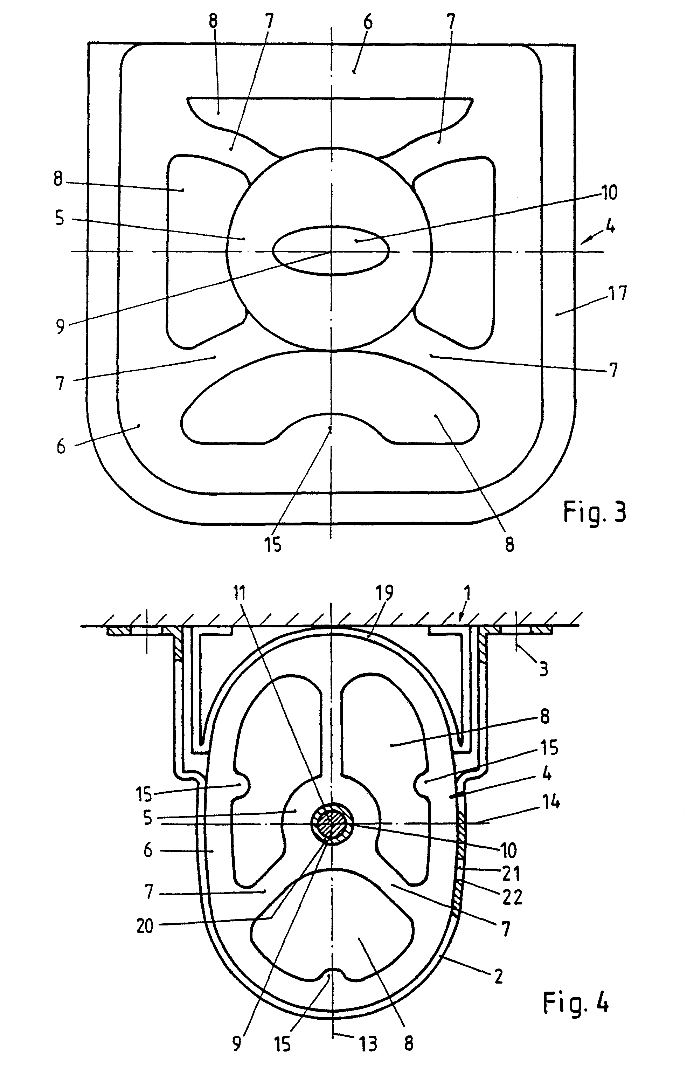

Wie insbes. die Fig. 2 und 3 erkennen lassen, besitzt das Federelement 4 eine Verstärkungsrippe 17. Entsprechend weist der Metallbügel 2 eine Nut 18 auf, so daß das Federelement 4, zumal wenn es unter Vorspannung eingebaut ist, in Richtung der Achse 9 von dem Metallbügel 2 fixiert gehalten ist. Der Einhängebügel 12 hingegen kann sich mit seinem freien Ende 11 in der Durchbrechung 10 und somit in Richtung der Achse 9 verschieben. Je nach der Temperaturausdehnung der Abgasanlage kann dieser Verschiebeweg mehrere Zentimeter betragen, so daß das freie Ende 11 entsprechend länger gestaltet ist als die Erstreckung des inneren Lagerteils 5 in Richtung der Achse 9.

Fig. 3 zeigt eine Seitenansicht des Federelementes 4 in vergrössernder Darstellung. Es ist gut ersichtlich, wie die ellyptische Gestaltung der Durchbrechung 10 einerseits eine große Auflagefläche für das freie Ende 11 des Einhängebügels 12 bildet und andererseits die Teile formschlüssig miteinander in Wirkverbindung treten, so daß beispielsweise bei außermittiger Anordnung des Lagers zu dem Rohr der Abgasanlage auch eine gewisse Torsionsbewegung möglich wird. Im übrigen ermöglicht das Lager eine Bewegung in den verschiedensten Freiheitsgraden. Die Abgasanlage kann gegenüber dem Lager axial oder radial bewegt werden. Auch eine verkantete Bewegung ist möglich, und zwar in den verschiedenen Richtungen. Selbstverständlich wird die Gesamtbewegung durch die Gestaltung der Abgasanlage an sich und durch die Anordnung der Aufhängepunkte bestimmt, wobei in jedem Aufhängepunkt ein solches Lager vorgesehen ist.

Es ist ersichtlich, daß der Metallbügel 2 und angepaßt das Federelement 4 ganz verschiedene Form aufweisen können, z. B. etwa kreisförmige Gestalt oder auch rechteckige Formgebung oder auch etwa quadratische Gestaltung, wie dies z. B. Fig. 1 zeigt. Fig. 4 zeigt eine ellyptische Formgebung, wobei die Hauptachse der Ellypse senkrecht, also in der vertikalen Längsmittelebene 13 angeordnet ist. Durch diese Konstruktion werden in vertikaler Richtung größere Federwege zugelassen als in horizontaler Richtung. Der Metallbügel 2 wird hier durch einen Beilagebügel 19 ergänzt. Der innere Lagerteil 5 besitzt hier eine runde Durchbrechung von größerem Innendurchmesser als es dem Außendurchmesser des freien Endes 11 des Einhängebügels 12 entspricht, der hier ebenfalls kreisrund ausgebildet ist. In dem sich somit ergebenden Zwischenraum ist eine Hülse 20, z. B. aus schlecht wärmeleitendem Kunststoff eingeschoben, so daß der Einhängebügel 12, der ja in leitender Verbindung mit der heißen Abgasanlage steht, wärmemäßig gegenüber dem Federelement 4 isoliert gehalten ist. Die Aufnahme- bzw. Verbindung des Federelementes 4 mit dem Bügel 2 kann auf verschiedene Art und Weise erfolgen. Statt der Verstärkungsrippe 17 und der Nut 18 sind hier Verankerungsnoppen 21 auf dem äußeren Umfang des äußeren Lagerteils 6 angeformt, die in entsprechende Aussparungen 22 des Metallbügels 2 eingreifen, so daß auf diese Art und Weise, zumal wenn das Federelement 4 unter Druckvorspannung eingebaut ist, eine sichere Fixierung in Richtung der Achse 9 am Metallbügel 2 erzielt wird.

## Patentansprüche

1. Lager für eine Abgasanlage eines Kraftfahrzeuges mit einem am Fahrzeugboden (1) zu befestigenden Metallbügel (2), einem mit Abgasanlage verbunden metallenen Einhängebügel (12) und einem die beiden Bügel verbinden schall- und schwingungsisolierenden Federelement (4) aus Elastomerwerkstoff, wobei das Federelement (4) einen ringförmigen inneren Lagerteil (5) und dazu auf Abstand einen etwa ringförmigen äußeren Lagerteil (86) aufweist, der innere Lagerteil (5) mit einer Durchbrechung (10) zur Aufnahme des Einhängebügels (12) versehen ist, und der Metallbügel (2) den äußeren Lagerteil (6) des Federelements zumindest teilweise umschließend vorgesehen ist, dadurch gekennzeichnet, daß das Federelement (4) die beiden Lagerteile (5, 6) verbindende, stegartige Federstreben (7) aufweist, daß der innere Lagerteil (5) mit seiner Durchbrechung (10) symmetrisch zur vertikalen Längsmittelebene (13) im eingebauten Zustand des Lagers und asymmetrisch zur dazu horizontalen Längsmittelebene (14) am Federelement (4) vorgesehen ist, und daß die unterhalb der horizontalen Längsmittelebene (14) angeordneten Federstreben (7) insgesamt einen größeren Querschnitt als die oberhalb angeordneten Federstreben aufweisen.

2. Lager nach Anspruch 1, dadurch gekennzeichnet, daß das Federelement (4) in dem Metallbügel (2) zumindest in einer Richtung unter Vorspannung gehalten ist.

3. Lager nach Anspruch 1 und 2, dadurch gekennzeichnet, daß der äußere Lagerteil (6) auf seiner dem Metallbügel (2) zugekehrten Oberfläche eine Verankerungsrippe (17) aufweist, mit der er in einer Nut (18) des Metallbügels (2) gehalten ist.

4. Lager nach Anspruch 1 bis 3, dadurch gekennzeichnet, daß die Federstreben (7) vom äußeren Lagerteil (6) einzeln beginnend im Bereich des inneren Lagerteils (5) zusammengeführt sind und gemeinsam in das innere Lagerteil (5) übergehen.

5. Lager nach Anspruch 1 bis 4, dadurch gekennzeichnet, daß auf der Innenseite des äußeren Lagerteils (6) oder der Außenseite des inneren Lagerteils (5) den Federweg des inneren Lagerteils (5) gegenüber dem äußeren Lagerteil (6) begrenzende Anschlagwulste (15) vorgesehen sind.

6. Lager nach Anspruch 1 bis 5, dadurch gekennzeichnet, daß die Federstreben (7) jeweils längs ihrer Erstreckung zwischen den beiden Lagerteilen (5, 6) etwa konstanten Querschnitt aufweisen.

7. Lager nach Anspruch 1 bis 6, dadurch gekennzeichnet, daß der innere Lagerteil (5) in axialer Richtung eine größere Breite als der äußere Lagerteil (6) aufweist.

## Claims

1. Bearing for an exhaust system of a motor vehicle having a metal strap (2) to be attached to the vehicle base (1), a metal clevis hook (12) connected to the exhaust system and a noise- and vibration-insulating spring element (4) of elastomer material which connects the strap and the hook, the spring element (4) having an annular inner bearing part (5) and, at a distance therefrom, an approximately annular outer bearing part (6), the inner bearing part (5) being provided with an opening (10) for accommodating the clevis hook (12) and the metal strap (2) being provided in a manner at least partially enclosing the outer bearing part (6) of the spring element, characterized in that the spring element (4) has spring stays (7) connecting the two bearing parts (5, 6), in that the inner bearing part (5) with its opening (10) is provided on the spring element (4) symmetrically to the vertical longitudinal centre plane (13) in the installed condition of the bearing and asymmetrically to the longitudinal centre plane (14) horizontal thereto, and in that in total the spring stays (7) arranged below the horizontal longitudinal centre plane (14) have a larger cross-section than the spring stays arranged above it.

2. Bearing according to Claim 1, characterized in that the spring element (4) is held under prestress in at least one direction in the metal strap (2).

3. Bearing according to Claim 1 and 2, characterized in that, on its surface facing the metal strap (2), the outer bearing part (6) has an anchoring rib (17) by means of which it is held in a groove (18) of the metal strap (2).

4. Bearing according to Claim 1 to 3, characterized in that, starting individually from the outer bearing part (6), the spring stays (7) are brought together in the region of the inner bearing part (5) and together merge into the inner bearing part (5).

5. Bearing according to Claim 1 to 4, characterized in that stop beads (15) limiting the spring deflection of the inner bearing part (5) with respect to the outer bearing part (6) are provided on the inside of the outer bearing part (6) or the outside of the inner bearing part (5).

6. Bearing according to Claim 1 to 5, characterized in that, in each case along their extension between the two bearing parts (5, 6), the spring stays (7) have an approximately constant cross-section.

7. Bearing according to Claim 1 to 6, characterized in that the inner bearing part (5) has a greater width in the axial direction than the outer bearing part (6).

**Revendications**

1. Support pour un échappement d'un véhicule, avec un arceau métallique (2) à fixer au plancher (1) du véhicule, un étrier métallique de suspension (12) relié à l'échappement et un élément élastique (4) en élastomère, isolant contre le bruit et les vibrations, reliant ces deux éléments (2, 12), l'élément élastique (4) présentant une partie intérieure (5) du support de forme annulaire et une partie extérieure (6) du support de forme à peu près annulaire située à distance de ladite partie intérieure (5), laquelle est pourvue d'une ouverture (10) pour recevoir l'étrier de suspension (12), l'arceau métallique (2) étant prévu pour enserrer au moins partiellement la partie extérieure (6) de support de l'élément élastique, caractérisé en ce que l'élément élastique (4) présente des bras ou contreforts élastiques (7) reliant entre elles les deux parties (5, 6) du support, en ce que la partie intérieure (5) du support est prévue dans l'élément élastique (4) avec son ouverture (10) symétrique par rapport au plan longitudinal médian vertical (13) dans l'état monté du support, et dissymétrique par rapport au plan longitudinal médian horizontal (14), et en ce que les contreforts (7) situés en dessous du plan longitudinal médian horizontal (14) présentent au total une section plus forte que les contreforts situés au dessus.

2. Support selon la revendication 1, caractérisé en ce que l'élément élastique (4) est maintenu dans l'arceau métallique (2) en étant sous précontrainte dans au moins une direction.

3. Support selon les revendications 1 et 2, caractérisé en ce que la partie extérieure (6) du support présente, sur sa surface tournée vers l'arceau métallique (2), une nervure d'ancrage (17) avec laquelle elle est maintenue dans une rainure (18) de l'arceau métallique (2).

4. Support selon les revendications 1 à 3, caractérisé en ce que les contreforts élastiques (7), commençant individuellement à partir de la partie extérieure (6) du support, sont dirigés ensemble dans la région de la partie intérieure (5) du support et se raccordent ensemble à cette partie intérieure (5) du support.

5. Support selon les revendications 1 à 4, caractérisé en ce que sont prévus sur le côté intérieur de la partie extérieure (6) du support, ou sur le côté extérieur de la partie intérieure (5) du support, des bourrelets de butée (15) limitant la course élastique de la partie intérieure (5) du support par rapport à la partie extérieure (6) du support.

6. Support selon les revendications 1 à 5, caractérisé 15 en ce que les contreforts élastiques (7) présentent chaque fois le long de leur étendue entre les deux parties (5, 6) du support une section à peu près constante.

7. Support selon les revendications 1 à 6, caractérisé en ce que la partie intérieure (5) du support présente dans le sens axial une largeur plus grande que la partie extérieure (6) du support.

Fig. 1

Fig. 2

Fig. 3

Fig. 4

3

Fig. 5

Fig. 6

Fig. 7

Fig. 8

7